Europäisches Patentamt

(19) European Patent Office

Office européen des brevets

(11) Publication number: **0 238 790**
**B1**

# (12) EUROPEAN PATENT SPECIFICATION

(45) Date of publication of the patent specification:
05.12.90

(21) Application number: **87100425.5**

(22) Date of filing: **15.01.87**

(51) Int. Cl.⁵: **F16D 69/02, C04B 35/52**

(54) Method of providing improved static friction for carbon brake material.

(30) Priority: **27.03.86 US 845217**

(43) Date of publication of application:
**30.09.87 Bulletin 87/40**

(45) Publication of the grant of the patent:
**05.12.90 Bulletin 90/49**

(84) Designated Contracting States:
**DE FR GB**

(56) References cited:
**FR-A- 2 006 447**
**FR-A- 2 257 821**
**FR-A- 2 430 545**
**GB-A- 2 055 776**
**US-A- 3 903 838**

(73) Proprietor: **ALLIED CORPORATION, Columbia Road and Park Avenue P.O. Box 2245R (Law Dept.), Morristown New Jersey 07960(US)**

(72) Inventor: **Awasti, Shrikant, c/o Allied Corporation 401 Bendix Drive, P.O. Box 4001 South Bend Indiana 46634(US)**

(74) Representative: **Baillie, Iain Cameron et al, c/o Ladas & Parry Isartorplatz 5, D-8000 München 2(DE)**

## Description

The invention relates generally to a carbon composite material having improved static friction and for use in aircraft brakes.

## BACKGROUND OF THE INVENTION

Carbon aircraft brakes generally comprise carbon/carbon composite discs which rub against one another and generate frictional heat, such as those disclosed in U.S. Patent No. US-A 3 639 197. GB-A 12 055 776 discloses production methods for making reinforced carbon fiber friction brake elements for aircraft which consist of carbon fiber reinforced carbon without additives. Under normal braking conditions, this carbon composite braking system works effectively and yields a dynamic and static coefficient of friction of approximately 0.2 to 0.5. However, in some static brake applications, the coefficient of friction can be as low as 0.10. For some aircraft, it is desirable to provide a carbon composite material having an improved static friction. This increases the braking control that the pilot is able to effect, and is particularly useful in eliminating the slight movement or "creep" of the aircraft which may occur while the brakes are applied. Therefore, it is desirable to provide a carbon composite brake material having improved static friction in order to increase the braking capability of the aircraft operator. It is desirable that the static coefficient of friction be increased by 20–100% for the carbon composite brake material.

## BRIEF STATEMENT OF THE INVENTION

The present invention comprises a method which produces a carbon brake component having carbon material with improved static-friction, and comprises the steps of molding a mixture of carbon fiber, thermosetting resin, and hard-phase additive into the shape of the carbon brake component, heating the carbon material in order to convert the thermosetting resin to glassy carbon, densifying the carbon material in order to minimize porosity by depositing additional carbon therein, heating the carbon material to a temperature in the range of l600-2800° C, and machining the carbon material to final dimensions of the carbon brake component.

If carbon fabric or felt is used, the hard-phase additive may be incorporated during the resin impregnation step, and the resulting prepreg molded and processed as above. A non-resinous carbon composite brake material can be made by evenly distributing the hard-phase additive over each layer of fabric or felt reinforcement prior to CVD processing.

## DESCRIPTION

Static friction in carbon composite friction materials is influenced by the surface condition of the carbon material and by the presence of adsorbed gaseous impurities. The wear life development of a carbon friction surface occurs in three stages, each stage being characterized by the surface condition of the respective stage. In the first stage, the surface is new and rough and it is charcterized by the presence of surface asperities. Friction at this stage is caused by interference with sliding motion by, and shearing of, the asperities on opposing surfaces. This friction mechanism is called "asperity interaction" and the coefficient of friction in this condition is high. In the second stage, after successive braking engagements, the asperities are worn off and leave a smoother surface and some wear debris. This surface condition is characterized by the presence of wear debris. The static friction in this stage is lower than the first stage and is caused by fracture and deformation of, and plowing by, the wear debris. In the final stage of surface friction development, the wear debris is firmly compacted on the friction surface to provide a smooth surface. This smooth surface condition is characterized by the presence of a smooth friction film. The friction mechanism in this case is adhesion. However, the adhesive forces are very low in carbon due to adsorbed impurities. A typical aircraft brake disc surface is in this condition and the static friction is low.

In other conditions, the static friction of a brake disc is high when either the friction film has been disturbed to generate some loose wear debris or the surface has been desorbed of impurities. These conditions are generally temporary. A few static braking engagements would smear the debris back into the surface and the value of static friction would drop to the original level. Also, the carbon disc surface would adsorb oxygen and water vapor from the atmosphere, and thereby lower static friction.

The present invention comprises a method that increases the static friction of the carbon brake disc by keeping the friction surface in the disturbed state, or by delaying the formation of compacted friction film, or by increasing asperity contact. This is accomplished by adding a hard-phase material, generally a ceramic, to the carbon composite material. Addition of this hard-phase material increases the asperity interaction in the initial stages. In the intermediate stages, it delays the formation of smooth compacted friction film. In the final stage, the debris from the hard-phase material maintains the friction surface in a disturbed state. A key element of the present invention is that the hard-phase additive is of such a nature that it is well anchored in the matrix and will not be dislodged from the matrix during braking. Prematurely dislodged particles will cause excessive wear and this is not desired. The present invention provides hard-phase asperities on the one hand, and fine wear debris on the other.

EXAMPLES

There are several methods for making carbon composite materials for use as a carbon friction component in aircraft brakes. The compositions of such components are comprised typically of carbon fiber (chopped, felt, or fabric) 30-70% by volume, chemical vapor deposited carbon 10-70% by volume, and glassy carbon derived from thermosetting resins 0-60% by volume of the entire composition. The resin may be any resin which yields a carbonaceous residue upon pyrolysis. The various heating cycle times are dependent upon the material of the article, size of the article, and load of the furnace, as is well known in the art. A method of making a carbon composite brake material for aircraft brakes comprises molding a mixture of (l) chopped carbon fiber, (2) a thermosetting resin of high char-yield type, and (3) a hard-phase additive in the amount of l-l0% by volume, into the shape of a carbon brake material. The molded carbon brake material comprising the above three constituents is thermally treated in a carbonization cycle in order to convert the resin to glassy carbon. The carbonization cycle is typically at a temperature in the range of approximately 500-ll00° C. Because of the porosity of the carbon brake material, the brake material is densified by either a chemical vapor deposition process (also called a chemical vapor infiltration process) or by a liquid resin/pitch impregnation, or by both methods. If the liquid impregnation method is used for densification of the carbon brake material, then the brake material must undergo another carbonization cycle at the above temperature range. The densified carbon brake material is then thermally treated for graphitization and stress relief, at a temperature in the range of approximately l600-2800° C, or to the maximum temperature permitted by the thermal stability of the hard-phase additive. Then the carbon brake material is machined to provide a carbon brake friction component having the required dimensions. Additionally, an oxidation protection may be applied to the carbon friction component if so desired. Typical oxidation protection substances comprise chemical penetrants or coating such as those disclosed in U. S. Patent No. 4,465,777.

In the above process, the hard-phase additive is added in the amount of l-l0% by volume of the mixture during the initial step of processing. This is achieved by mixing it mechanically with the fibers in the resin so that the molding compound obtained has three separate phases -- fibers, hard-phase additive, and the thermosetting resin. The mixture is then molded into the carbon brake material and further processed as described above. The resulting carbon friction component has a composition typically as follows:

Carbon Fiber: 25-70% by weight
CVD Carbon: 0-50% by weight
Glassy Carbon: l0-60% by weight
Hard-Phase Additive: l-25% by weight

The composition of the carbon composite brake material (exclusive of the hard-phase additive) may depend on a particular application desired by the user, and can vary according to the desired properties for that particular application.

If the carbon composite brake material is to be based on fabric or felt, then the hard-phase additive can be incorporated in the resin-impregnation step. Initially, the fabric or felt material is placed within a resin vat having therein the hard-phase additive. The following staging step serves to heat the impregnated fabric or felt at a low temperature in order to remove volatiles. Then the resulting prepreg is cut to shape and heated under pressure in a molding step, followed by a carbonization cycle during which the molded carbon brake material is heated to a temperature in the range of approximately 500-ll00° C. This is followed by a densification step (typically CVD carbon deposition) in order to minimize porosity and deposit further carbon thereon. Then the carbon brake material is heat treated for graphitization and stress relief at a temperature in the range of approximately l600-2800° C, and followed by machining of the carbon brake material into the final dimensions of a carbon friction component. Additionally, the oxidation protection may be applied to the carbon friction component, as described above.

In order to provide a non-resin based carbon composite brake material, the hard-phase additive can be incorporated by even distribution on each layer of carbon fiber reinforcement prior to CVD processing. The reinforcement fixture, which may comprise a fabric material, and the hard-phase additive evenly distributed thereon, are placed within the chemical vapor deposition apparatus, and the deposition process completed. This is followed by the heat treating for graphitization and stress relief, and then machining to the final dimensions and with an optional application of oxidation protection if so desired. The resulting non-resin based carbon brake material has a composition comprising:

Carbon Fiber: 25-70% by weight
CVD Carbon: 25-70% by weight
Hard-Phase Additive: l-25% by weight

Table A below provides an example of hard-phase additives utilized in the chopped carbon fiber process to provide a carbon composite brake material with improved static friction. As can be seen in the Table, the

TABLE A

| COMPO- SITION NO. | HARD- PHASE ADDI- TIVE | MORPHOLOGY | NOMINAL SIZE | VOLUME PER- CENT | MINIMUM STATIC FRICTION COEFFI- CIENT | DYNAMIC FRICTION COEFFI- CIENT | RELA- TIVE WEAR RATE |
|---|---|---|---|---|---|---|---|
| 1 | none | | | 0 | 0.1 | 0.27 | 1.00 |
| 2 | SiC | round part. | < 10 μm | 2.5 | 0.181 | 0.373 | 12.80 |
| 3 | TiB$_2$ | irreg.part. | < 25 μm | 2.5 | 0.137 | 0.225 | 3.35 |
| 4 | SiC | round part. | 80 μm | 2.5 | 0.153 | 0.307 | 7.40 |
| 5 | TiB$_2$ | irreg.part. | <100 μm | 2.5 | 0.148 | 0.228 | 1.60 |
| 6 | SiC | round part. | <10 μm | 7.5 | 0.127 | 0.385 | 33.05 |
| 7 | TiB$_2$ | irreg.part. | <25 μm | 7.5 | 0.159 | 0.209 | 1.35 |
| 8 | SiC | round part. | 80 μm | 7.5 | 0.232 | 0.282 | 18.50 |
| 9 | TiB$_2$ | irreg.part. | <100 μm | 7.5 | 0.165 | 0.265 | 3.15 |
| 10 | SiC | fibers | 12μmx9mm | 2.5 | 0.153 | 0.286 | 1.10 |
| 11 | SiC | fibers | 12μmx9mm | 7.5 | 0.142 | 0.286 | 4.45 |

materials with round particle additives exhibit a higher wear rate than those materials containing irregular particles or fibers. However, in all cases the static friction is improved to varying degrees.

Composition No. I comprises a typical carbon composite brake material not having any hard-phase additive included therein, and provides a baseline figure for comparison with the carbon composite materials having a hard-phase additive added thereto.

Table A illustrates that the dynamic friction of the carbon composite brake material is also affected, but remains in the usable range for aircraft brakes. Also, the TiB$_2$ additive has been found to improve the oxidation resistance of the carbon/carbon composite brake component.

Although the present invention has been illustrated and described in connection with the examples, it will be understood that this is illustrative of the invention, and is by no means restrictive, thereof. It is reasonably to be expected that those skilled in the art can make numerous revisions and additions to the invention and it is intended that such revisions and additions will be included in the scope of the following claims as equivalents of the invention.

**Claims**

1. A method for providing a carbon/carbon composite brake component having carbon material and high static friction, comprising the steps of molding a mixture of chopped carbon fiber, thermosetting resin, and hard-phase additive into the shape of the brake component, the hard-phase additive comprising a ceramic material in the form of one of a particle and a fiber and in the amount of 1-10% by volume of the entire composition, heating the molded mixture in order to convert the thermosetting resin to glassy carbon, densifying the carbon material in order to reduce porosity thereof by depositing additional carbon therein, heating the carbon material to a temperature in the range of 1600-2800° C, and machining the carbon material to final dimensions of the brake component, the ceramic material being anchored firmly within the carbon material so that the brake component has high static friction.

2. The method in accordance with claim 1, wherein the additive is one of SiC and TiB$_2$.

3. The method in accordance with claim 1, wherein the heating to convert the resin to glassy carbon occurs in a temperature range of 500-1100° C.

4. The method in accordance with claim 3, wherein the chopped carbon fiber comprises 30-70% by volume of the entire composition.

5. The method in accordance with claim 1, wherein the densification of the carbon material further comprises a liquid resin/pitch impregnation followed by heating to a temperature in the range of 500-1100° C.

6. A method for providing a carbon/carbon composite brake component having carbon material and high static friction, comprising the steps of impregnating a carbon fabric material in a resin bath having therein a hard-phase additive comprising a ceramic material in the form of one of a particle and a fiber, heating the fabric material to a low temperature in order to remove volatiles therefrom and provide a prepreg, forming the prepreg to a desired shape, molding the prepreg under pressure and heat to form a carbon fabric brake material, heating the carbon fabric brake material to a temperature in the range of 800-1100° C to produce a porous substrate with a glassy carbon matrix, densifying the porous substrate by chemical vapor deposition in order to reduce porosity and add additional carbon thereto, heat-treating the resulting composite to a temperature in the range of 1600-2800° C, and machining the composite to dimension to provide the carbon brake component, wherein the carbon fabric material comprises 30-70% by volume, carbon provided by densification comprises 10-70% by volume, glassy carbon comprises 0-60% by volume, and the ceramic material comprises 1-10% by volume of the entire composition, the ceramic material being anchored firmly within the composite so that the brake component has high static friction.

7. The method in accordance with claim 6, wherein the additive is one of SiC and TiB$_2$.

8. The method in accordance with claim 7, wherein the fabric comprises felt.

9. A method for providing a carbon/carbon composite friction component having high static friction, comprising the steps of distributing a ceramic material in the form of one of a particle and a fiber on a carbon fabric material and placing the carbon fabric material within a fixture for chemical vapor deposition, densifying the carbon fabric material by adding carbon thereto in order to reduce the porosity thereof and provide a friction material, heat-treating the densified carbon friction material to a tempeidture in the range of 1600-2800° C, and machining the carbon friction material in order to provide the carbon friction component which comprises carbon fiber in the amount of 25-70% by weight of the component, chemical vapor deposition carbon in the amount of 25-70% by weight of the component, and ceramic material in the amount of 1-25% by weight of the component, so that the ceramic material is anchored firmly within the friction material and the friction component has high static friction.

10. The method in accordance with claim 9, further comprising the step of applying an oxidation protective material to the carbon friction component.

## Patentansprüche

1. Verfahren zum Herstellen eines aus Kohlenstoff-Kohlenstoff-Verbundstoff bestehenden Bremsbestandteils, der Kohlenstoff enthält und eine starke Haftreibung besitzt, mit folgenden Schritten: ein Gemisch aus Kohlenstoff-Stapelfasern, einem duroplastischen Harz und einem eine harte Phase bildenden Zusatzstoff wird durch Formpressen in die Form des Bremsenteils verformt, wobei der eine harte Phase bildende Zusatzstoff mindestens teilweise aus einem keramischen Material aus Teilchen oder Fasern besteht, das in einer Menge von 1 bis 10 Vol.-% der Gesamtzusammensetzung vorhanden ist; das formgepreßte Gemisch wird erhitzt, um das duroplastische Harz in glasartigen Kohlenstoff umzuwandeln; durch Ablagern von zusätzlichem Kohlenstoff in dem Kohlenstoffmaterial wird dieses verdichtet, indem seine Porosität herabgesetzt wird, das Kohlenstoffmaterial wird auf eine Temperatur im Bereich von 1600 bis 2800°C erhitzt; und das Kohlenstoffmaterial wird auf die Fertigmaße des Bremsbestandteils spanend bearbeitet; wobei das keramische Material in dem Kohlenstoffmaterial fest verankert ist, so daß der Bremsbestandteil eine starke Haftreibung hat.

2. Verfahren nach Anspruch 1, dadurch gekennzeichnet, daß der Zusatzstoff aus SiC oder TiB$_2$ besteht.

3. Verfahren nach Anspruch 1, dadurch gekennzeichnet, daß zum Umwandeln des Harzes in glasartigen Kohlenstoff auf eine Temperatur im Bereich von 500 bis 1100°C erhitzt wird.

4. Verfahren nach Anspruch 3, dadurch gekennzeichnet, daß die Menge der Kohlenstoff-Stapelfasern 30 bis 70 Vol.-% der ganzen Zusammensetzung beträgt.

5. Verfahren nach Anspruch 1, dadurch gekennzeichnet, daß zum Verdichten des Kohlenstoffmaterials dieses ferner mit Flüssigharz und Pech imprägniert und danach auf eine Temperatur im Bereich von 500 bis 1100°C erhitzt wird.

6. Verfahren zum Herstellen eines aus Kohlenstoff-Kohlenstoff-Verbundstoff bestehenden Bremsbestandteils, der Kohlenstoff enthält und eine starke Haftreibung besitzt, ein Kohlenstoff-Textilstoff wird in einem Harzbad imprägniert, das einen eine harte Phase bildenden Zusatzstoff enthält, der mindestens teilweise aus Teilchen oder Fasern besteht; zum Beseitigen von flüchtigen Stoffen aus dem Textilstoff wird dieser auf eine niedrige Temperatur erwärmt, wobei ein Prepreg erhalten wird; dem Prepreg wird eine gewünschte Form erteilt; durch Formpressen des Prepregs unter Druck und Wärme wird ein aus einem Textilstoff bestehender Bremsenwerkstoff aus Kohlenstoff hergestellt; der aus einem Kohlenstoff-Textilstoff bestehende Bremsenwerkstoff wird auf eine Temperatur im Bereich von 800 bis 1100°C erhitzt, wobei ein poröses Substrat mit einer Matrix aus glasartigem Kohlenstoff erhalten wird; durch chemisches Aufdampfen wird das poröse Substrat verdichtet, um seine Porosität zu vermindern und zusätzlichen Kohlenstoff zuzusetzen; der so erhaltene Verbundstoff wird bei einer Temperatur im Bereich von 1600 bis 2800°C wärmebehandelt; der Verbundstoff wird auf die Maße des Kohlenstoff-Bremsbestandteils spanend bearbeitet; wobei die Gesamtzusammensetzung zu 30 bis 70 Vol.-% aus dem Kohlenstoff-Textilstoff, 10 bis 70 Vol.-% aus dem zur Verdichtung verwendeten Kohlenstoff, zu 0 bis 60 Vol.-% aus dem glasartigen Kohlenstoff und zu 1 bis 10 Vol.-% aus dem keramischen Material besteht und das keramische Material in dem Verbundstoff fest verankert ist, so daß der Bremsbestandteil eine starke Haftreibung hat.

7. Verfahren nach Anspruch 6, dadurch gekennzeichnet, daß der Zusatzstoff aus SiC oder TiB$_2$ besteht.

8. Verfahren nach Anspruch 7, dadurch gekennzeichnet, daß der Textilstoff mindestens teilweise aus Filz besteht.

9. Verfahren zum Herstellen eines aus einem Kohlenstoff-Kohlenstoff-Verbundkörper bestehenden Reibelements mit starker Haftreibung mit folgenden Schritten: ein keramisches Material, das aus Teilchen oder Fasern besteht, wird auf einem Kohlenstoff-Textilstoff verteilt; der Kohlenstoff-Textilstoff wird in einer Vorrichtung zum chemischen Aufdampfen festgelegt; durch Zusatz von Kohlenstoff zu dem Kohlenstoff-Textilstoff wird dieser verdichtet, wobei seine Porosität herabgesetzt und ein Reibmaterial erhalten wird; das verdichtete Kohlenstoff-Reibmaterial wird bei einer Temperatur im Bereich von 1600 bis 2800°C wärmebehandelt; durch spanendes Bearbeiten des Kohlenstoff-Reibmaterials wird das Kohlenstoff-Reibelement hergestellt, der zu 25 bis 70 Gew.-% aus Kohlenstofffasern, zu 25 bis 70 Gew.-% chemisch aufgedampftem Kohlenstoff und zu 1 bis 25 Gew.-% aus keramischem Material besteht; wobei das keramische Material in dem Reibwerkstoff fest verankert ist und das Reibelement eine starke Haftreibung hat.

10. Verfahren nach Anspruch 9, mit einem Schritt, in dem auf dem Kohlenstoff-Reibelement ein Oxidationsschutzstoff aufgetragen wird.

## Revendications

1. Méthode pour réaliser un composant de frein en composite carbone/carbone comportant un matériau de carbone et présentant une friction statique élevée, comprenant les étapes consistant à mouler sous la forme d'un composant de frein un mélange de fibres de carbone hachées, de résine thermodurcissable et d'additif pour constituer une phase dure, l'additif pour constituer une phase dure comprenant un matériau céramique sous la forme soit de particules, soit de fibres, en une proportion de 1-10% en volume de la composition totale, à chauffer le mélange moulé afin de convertir la résine thermodurcissable en carbone vitreux, à densifier le matériau de carbone afin de réduire sa porosité en y déposant du carbone additionnel, à chauffer le matériau de carbone à une température dans la gamme de 1600-2800°C et à usiner le matériau de carbone aux dimensions finales du composant de frein, le matériau céramique étant ancré fermement dans le matériau de carbone, de sorte que le composant de frein présente une friction statique élevée.

2. Méthode selon la revendication 1, où l'additif est choisi entre le SiC et le TiS$_2$.

3. Méthode selon la revendication 1, où le chauffage pour convertir la résine en carbone vitreux se fait à une température dans la gamme de 500-1100°C.

4. Méthode selon la revendication 3, où les fibres de carbone hachées constituent 30-70% en volume de la composition totale.

5. Méthode selon la revendication 1, où la densification du matériau de carbone comprend en outre une imprégnation par un liquide résine/brai, suivie par un chauffage à une température dans la gamme de 500-1100°C.

6. Méthode pour réaliser un composant de frein en composite carbone/carbone ayant un matériau de carbone et une friction statique élevée, comprenant les étapes consistant à imprégner un matériau de tissu de carbone dans un bain de résine contenant un additif constituant une phase dure comprenant un matériau céramique sous la forme soit de particules, soit de fibres, à chauffer le matériau de tissu à une température peu élevée afin d'en enlever les substances volatiles et de réaliser une préparation préimprégnée, à conférer à la préparation préimprégnée la forme souhaitée, à mouler la préparation préimprégnée sous pression et en chauffant pour former un matériau de frein en tissu de carbone, à chauffer le matériau de frein en tissu de carbone à une température dans la gamme de 800-1100°C pour produire un substrat poreux avec une matrice de carbone vitreux, à densifier le substrat poreux par dépôt en phase gazeuse par voie chimique afin de réduire la porosité et ajouter du carbone supplémentaire, à faire subir un traitement thermique au composite résultant à une température dans la gamme de 1600-2800°C et à usiner le composite aux dimensions pour fournir le composant de frein en carbone, où le matériau de tissu de carbone constitue 30-70% en volume, le carbone apporté par la densification constitue 10-70% en volume, le carbone vitreux constitue 0-60% en volume et le matériau céramique constitue 1-10% en volume, de la composition totale, le matériau céramique étant solidement ancré dans le composite, si bien que le composant de frein présente une friction statique élevée.

7. Méthode selon la revendication 6, où l'additif est soit le SiC, soit le TiB$_2$.

8. Méthode selon la revendication 7, où le tissu comprend du feutre.

9. Méthode pour réaliser un composant à friction en composite carbone/carbone présentant une friction statique élevée, comprenant les étapes consistant à répartir un matériau céramique soit sous la forme de particules, soit sous la forme de fibres sur un matériau de tissu de carbone et à placer le matériau de tissu de carbone à l'intérieur d'un dispositif pour effectuer un dépôt en phase gazeuse par voie chimique, à densifier le matériau de tissu de carbone en y ajoutant du carbone afin d'en réduire la porosité et de fournir un matériau à friction, à faire subir un traitement thermique au matériau à friction en carbone densifié à une température dans la gamme de 1600-2800°C, et à usiner le matériau à friction en carbone afin de fournir un composant à friction en carbone qui comprend des fibres de carbone en une proportion de 25-70% en poids du composant, du carbone déposé en phase gazeuse par voie chimique en une proportion de 25-70% en poids du composant, et un matériau céramique en une proportion de 1-25% en poids du composant, si bien que le matériau céramique se trouve ancré fermement dans le matériau à friction et le composant à friction a une friction statique élevée.

10. Méthode selon la revendication 9, comprenant en outre l'étape d'application d'un matériau de protection contre l'oxydation au composant à friction en carbone.